# DEMANDE DE BREVET EUROPEEN

(11) **EP 4 411 725 A1**
(43) Date de publication de la demande: **07.08.2024**
(21) Numéro de dépôt: 24151109.6
(22) Date de dépôt: 10.01.2024
(51) Int. Cl.: G10K 11/172, B32B 3/12, F02C 7/045, F02K 1/82

(54) **STRUCTURE ALVÉOLAIRE D'UN PANNEAU D ATTÉNUATION ACOUSTIQUE COMPRENANT AU MOINS UN ÉLÉMENT RAPPORTÉ ET CONFIGURÉ POUR VIBRER À UNE FRÉQUENCE SOUHAITÉE, PROCÉDÉ DE FABRICATION DE LADITE STRUCTURE ALVÉOLAIRE**

(30) Priorité: 31.01.2023 FR 2300864
(71) Demandeur: Airbus SAS, 31700 Blagnac Cedex (FR); AIRBUS OPERATIONS (S.A.S.), 31060 Toulouse (FR)
(72) Inventeur: PONS, François, 31060 Toulouse (FR); CAZEAUX, Laurent, 31060 Toulouse (FR); CARAZO MENDEZ, Arnulfo, 31060 Toulouse (FR); MERCAT, Florent, 31060 Toulouse (FR); BELLANGER, Alexandre, 31060 Toulouse (FR); PRESSEQ, Laurent, 31060 Toulouse (FR); GAUTHIER, Maxime, 31060 Toulouse (FR); TEIGNE, Manuel, 31060 Toulouse (FR); WESSEL, Philippe, 31060 Toulouse (FR); BONNEFONT, Joelle, 31060 Toulouse (FR)
(74) Mandataire: Fantin, Laurent

(57) **Abrégé**

L'invention a pour objet une structure alvéolaire d'un panneau d'atténuation acoustique configuré pour atténuer au moins une onde sonore de fréquence sonore donnée, caractérisée en ce que la structure alvéolaire (42) comprend au moins un élément rapporté, distinct des cloisons (46), configuré pour vibrer à une fréquence sensiblement égale à la fréquence sonore de l'onde sonore à atténuer.

Cette solution permet, à partir d'une structure alvéolaire qui présente une épaisseur relativement faible et constante, d'atténuer des ondes sonores sur plusieurs plages de fréquence, notamment au moins une dans les basses fréquences.

L'invention a également pour objet un procédé de fabrication d'une telle structure alvéolaire, un panneau d'atténuation acoustique comprenant au moins une telle structure alvéolaire ainsi qu'un aéronef comprenant au moins un tel panneau d'atténuation acoustique.

## Description

La présente demande se rapporte à une structure alvéolaire d'un panneau d'atténuation acoustique comprenant au moins un élément rapporté et configuré pour vibrer à une fréquence souhaitée ainsi qu'à un procédé de fabrication de ladite structure alvéolaire. La présente demande concerne également un panneau d'atténuation acoustique comprenant au moins une telle structure alvéolaire ainsi qu'un aéronef comprenant au moins un tel panneau d'atténuation acoustique.

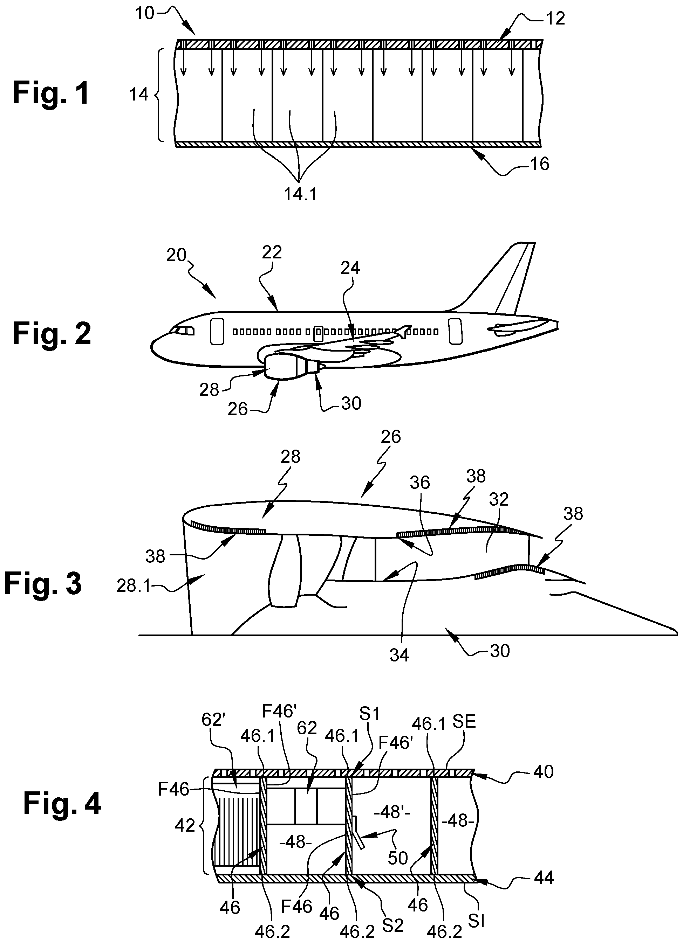

Selon un mode de réalisation de l'art antérieur, un ensemble de propulsion comprend une nacelle ainsi qu'une turbomachine double flux positionnée à l'intérieur de la nacelle. Certaines surfaces de la nacelle et de la turbomachine comprennent des panneaux d'atténuation acoustique pour atténuer les nuisances sonores. Selon un mode de réalisation visible sur la figure 1, un panneau d'atténuation acoustique 10 comprend au moins une couche perméable 12, au moins une structure alvéolaire 14 et une couche pleine 16. Pour la suite de la description, une couche est dite perméable si elle est poreuse ou comprend des ouvertures ou des trous la traversant.

Un tel panneau d'atténuation acoustique 10 utilise le principe d'un résonateur de Helmholtz. Ainsi, la structure alvéolaire 14 présente des cellules 14.1 dont le volume est ajusté en fonction de la plage de fréquences des ondes sonores à atténuer.

Pour certaines fréquences, le panneau d'atténuation acoustique 10 présente une unique structure alvéolaire 14, comme illustré sur la figure 1. Pour d'autres fréquences, notamment les basses fréquences, le panneau d'atténuation acoustique 10 peut comprendre deux structures alvéolaires superposées et séparées par une couche perméable.

Ces panneaux d'atténuation acoustique sont relativement performants pour une plage de fréquences donnée, située dans les hautes fréquences. Pour atténuer différentes plages de fréquences dont certaines sont situées dans les basses fréquences, il est nécessaire de prévoir des panneaux d'atténuation acoustique avec des épaisseurs différentes, notamment des panneaux d'atténuation acoustique avec une épaisseur importante, adaptés pour les basses fréquences, ce qui est pénalisant en termes de masse, d'encombrement et de fabrication.

La présente invention vise à remédier à tout ou partie des inconvénients de l'art antérieur.

A cet effet, l'invention a pour objet une structure alvéolaire d'un panneau d'atténuation acoustique configuré pour atténuer au moins une onde sonore de fréquence sonore donnée, la structure alvéolaire s'étendant entre des première et deuxième surfaces, la structure alvéolaire comportant une multitude de cellules séparées par des cloisons qui présentent chacune un premier bord au niveau de la première surface, un deuxième bord au niveau de la deuxième surface ainsi que des troisième et quatrième bords reliant les premier et deuxième bords.

Selon l'invention, la structure alvéolaire comprend au moins un élément rapporté, distinct des cloisons, configuré pour vibrer à une fréquence sensiblement égale à la fréquence sonore de l'onde sonore à atténuer.

Cette solution permet, à partir d'une structure alvéolaire qui présente une épaisseur relativement faible et constante, d'atténuer des ondes sonores sur plusieurs plages de fréquences, notamment au moins une dans les basses fréquences.

Selon une autre caractéristique, l'élément rapporté est une languette présentant une première extrémité reliée à une cloison de la structure alvéolaire ainsi qu'une deuxième extrémité libre, ladite languette étant configurée pour vibrer à une fréquence sensiblement égale à la fréquence sonore de l'onde sonore à atténuer.

Selon une autre caractéristique, la structure alvéolaire comprend trois languettes fixées sur la même cloison, alignées selon une direction sensiblement parallèle aux troisième ou quatrième bords de la cloison, approximativement centrées entre ces troisième et quatrième bords et régulièrement réparties entre les premier et deuxième bords.

Selon une autre caractéristique, les cloisons présentent chacune une longueur prise selon une direction parallèle aux troisième et quatrième bords ainsi qu'une largeur prise selon une direction parallèle aux premier et deuxième bords . En complément, chaque languette présente une première partie, plaquée contre la cloison et fixée à cette dernière, qui s'étend à partir de la première extrémité ainsi qu'une deuxième partie, détachée de la cloison, qui s'étend à partir de la deuxième extrémité, les première et deuxième parties étant séparées par une ligne de pliage, chaque languette présentant une épaisseur de l'ordre de 50 à 500 µm, une largeur constante de l'ordre de 10 à 90% de la largeur des cloisons, la deuxième partie présentant une longueur de l'ordre de 5 à 80 % de la longueur des cloisons.

Selon une autre caractéristique, la structure alvéolaire comprend des cloisons simples comprenant chacune une unique couche de matière et des cloisons doubles comprenant chacune deux couches de matière collées l'une contre l'autre. En complément, toutes les cloisons simples d'au moins une zone considérée de la structure alvéolaire comprennent chacune au moins une languette.

Selon une autre caractéristique, l'élément rapporté est une bande de matière présentant deux extrémités reliés aux cloisons de la structure alvéolaire et traversant au moins une cellule, ladite bande de matière étant configurée pour vibrer à une fréquence sensiblement égale à la fréquence sonore de l'onde sonore à atténuer.

Selon une autre caractéristique, la bande de matière présente des bords supérieur et inférieur sensiblement parallèles entre eux et aux premier et deuxième bords des cloisons.

Selon une autre caractéristique, pour chaque cellule de la cellule alvéolaire traversée, la bande de matière comprend une sur-longueur lui permettant de vibrer.

Selon une autre caractéristique, chaque bande de matière présente une hauteur sensiblement égale à un tiers de celle des cloisons ainsi qu'une épaisseur de l'ordre de 20 à 500 µm, chaque bande de matière présentant dans chaque cellule traversée une partie centrale courbe ainsi que des première et deuxième parties latérales, plates et coplanaires, disposées de part et d'autre de la partie centrale.

Selon une autre caractéristique, chaque bande de matière est plate et présente des franges. Selon une autre caractéristique, la structure alvéolaire comprend plusieurs bandes de matière traversant toutes les cellules d'au moins une zone considérée de la structure alvéolaire. Selon une autre caractéristique, la structure alvéolaire comprend au moins des première et deuxième zones, la première zone étant configurée pour atténuer au moins une onde sonore présentant une première fréquence sonore, la deuxième zone étant configurée pour atténuer au moins une onde sonore présentant une deuxième fréquence sonore différente de la première fréquence sonore ; la structure alvéolaire comprenant dans la première zone au moins un élément rapporté, distinct des cloisons, configuré pour vibrer à une fréquence sensiblement égale à la première fréquence sonore.

Selon une autre caractéristique, au moins une cloison de la deuxième zone présente au moins une cavité configurée de manière à ce que ladite cloison de la deuxième zone vibre à une fréquence sensiblement égale à la deuxième fréquence sonore.

Selon une autre caractéristique, la structure alvéolaire comprend dans la deuxième zone au moins un élément rapporté, distinct des cloisons, configuré pour vibrer à une fréquence sensiblement égale à la deuxième fréquence.

L'invention a également pour objet un procédé de fabrication d'une structure alvéolaire selon l'une des caractéristiques précédentes, le procédé de fabrication comprenant une étape de découpe de feuilles, des étapes de pliage et d'encollage des feuilles, une étape d'empilage des feuilles de manière à obtenir un empilage de feuilles ainsi qu'une étape d'étirement de l'empilage de manière à obtenir la structure alvéolaire. Selon l'invention, le procédé de fabrication comprend une étape de pose des éléments rapportés réalisée sur chaque feuille avant l'étape d'empilage ou de manière alternée avec l'étape d'empilage, les éléments rapportés étant posés après le dépôt d'une nouvelle feuille.

L'invention a également pour objet un panneau d'atténuation acoustique comprenant au moins une structure alvéolaire selon l'une des caractéristiques précédentes ainsi qu'un aéronef comprenant au moins un tel panneau d'atténuation acoustique.

D'autres caractéristiques et avantages ressortiront de la description de l'invention qui va suivre, description donnée à titre d'exemple uniquement, en regard des dessins annexés parmi lesquels :
- La figure 1 est une coupe longitudinale d'une partie d'un panneau d'atténuation acoustique illustrant un mode de réalisation de l'art antérieur,
- La figure 2 est une vue latérale d'un aéronef,
- La figure 3 est une demie-coupe longitudinale d'un ensemble de propulsion d'un aéronef,
- La figure 4 est une coupe longitudinale d'une partie d'un panneau d'atténuation acoustique comprenant des éléments rapportés et configurés pour vibrer à une fréquence souhaitée illustrant un mode de réalisation de l'invention,
- La figure 5 est une vue en perspective d'une structure alvéolaire comprenant des languettes vibrantes illustrant un mode de réalisation de l'invention,
- La figure 6 est une coupe longitudinale d'une cloison de la structure alvéolaire visible sur la figure 5,
- La figure 7 est une représentation schématique des différentes étapes d'un procédé de fabrication d'une structure alvéolaire,
- La figure 8 est une représentation schématique des différentes étapes d'un procédé de fabrication d'une structure alvéolaire telle, que visible sur la figure 5, illustrant un mode de réalisation de l'invention,
- La figure 9 est une vue en perspective d'une structure alvéolaire comprenant des bandes de matière vibrantes illustrant un autre mode de réalisation de l'invention,
- La figure 10 est une vue de dessus d'une cellule de la structure alvéolaire visible sur la figure 9,
- La figure 11 est une représentation schématique des différentes étapes d'un procédé de fabrication d'une structure alvéolaire telle que visible sur la figure 9,
- La figure 12 est une vue de dessus d'une cellule d'une structure alvéolaire comprenant une bande de matière à franges illustrant un autre mode de réalisation de l'invention,
- La figure 13 est une vue latérale d'une bande de matière à franges illustrant un mode de réalisation de l'invention,
- La figure 14 est une représentation schématique des différentes étapes d'un procédé de fabrication d'une structure alvéolaire telle que visible sur la figure 12,
- La figure 15 est une vue en perspective d'une structure alvéolaire comprenant des cloisons pourvues de cavités illustrant un mode de réalisation de l'invention,
- La figure 16 est une représentation schématique des différentes étapes d'un procédé de fabrication d'une structure alvéolaire telle que visible sur la figure 15.

Selon un mode de réalisation visible sur la figure 2, un aéronef 20 comprend un fuselage 22, deux ailes 24 disposées de part et d'autre du fuselage 22 ainsi que des ensembles de propulsion 26 fixés sous les ailes 24. Chaque ensemble de propulsion 26 comprend une nacelle 28 et une turbomachine 30 positionnée à l'intérieur de la nacelle 28.

Selon un mode de réalisation visible sur la figure 3, l'ensemble de propulsion 26 comprend une entrée d'air 28.1, un conduit d'éjection secondaire 32, canalisant un flux d'air secondaire, qui est délimité par une paroi intérieure 34 (également appelée IFS pour inner fixed structure en anglais) et par une paroi extérieure 36 (également appelée OFS pour outer fixed structure en anglais).

Selon une configuration, l'entrée d'air 28.1, la paroi intérieure 34 ou la paroi extérieure 36 comprend au moins un panneau d'atténuation acoustique 38 qui présente une surface extérieure SE en contact avec le flux d'air secondaire et une surface intérieure SI opposée à la surface extérieure SE.

Bien que décrite appliquée à un conduit d'éjection secondaire 32, l'invention n'est pas limitée à cette application. Ainsi, le panneau d'atténuation acoustique 38 peut être positionné au niveau de toute peau qui présente une surface extérieure SE en contact avec un milieu extérieur Ext dans lequel se propagent en fonctionnement des ondes sonores, comme par exemple une lèvre et un conduit d'une entrée d'air d'une nacelle d'aéronef, un carter de soufflante d'une nacelle d'aéronef ou toute autre surface de l'ensemble de propulsion 26 ou de l'aéronef 20. Quelle que soit la configuration, l'aéronef 20 comprend au moins un panneau d'atténuation acoustique 38.

Selon un mode de réalisation visible sur la figure 4, un panneau d'atténuation acoustique 38 comprend, de la surface extérieure SE vers la surface intérieure SI, une structure perméable 40 dont une face forme la surface extérieure SE, au moins une structure alvéolaire 42 ainsi qu'une couche pleine 44 dont une face forme la surface intérieure SI.

La couche pleine 44 comprend au moins une plaque fine, métallique ou en matériau composite, imperméable aux ondes sonores.

La structure perméable 40, également appelée couche acoustiquement résistive, peut être métallique ou en matériau composite et comprendre une ou plusieurs couche(s). La structure perméable 40 est perméable à au moins une onde sonore se propageant dans le milieu extérieur Ext.

La structure perméable 40 et la couche pleine 44 ne sont pas plus décrites car elles peuvent être identiques à celles de l'art antérieur.

Selon une configuration visible sur la figure 4, le panneau d'atténuation acoustique 38 comprend une unique structure alvéolaire 42 entre la structure perméable 40 et la couche pleine 44. Selon une autre configuration, le panneau d'atténuation acoustique 38 comprend, entre la structure perméable 40 et la couche pleine 44, plusieurs structures alvéolaires 42 superposées les unes sur les autres et séparées entre elles par une structure perméable, également appelée septum, ou plusieurs structures alvéolaires 42 juxtaposées.

Bien entendu, le fait de prévoir une unique structure alvéolaire 42 permet d'obtenir un panneau d'atténuation acoustique moins épais.

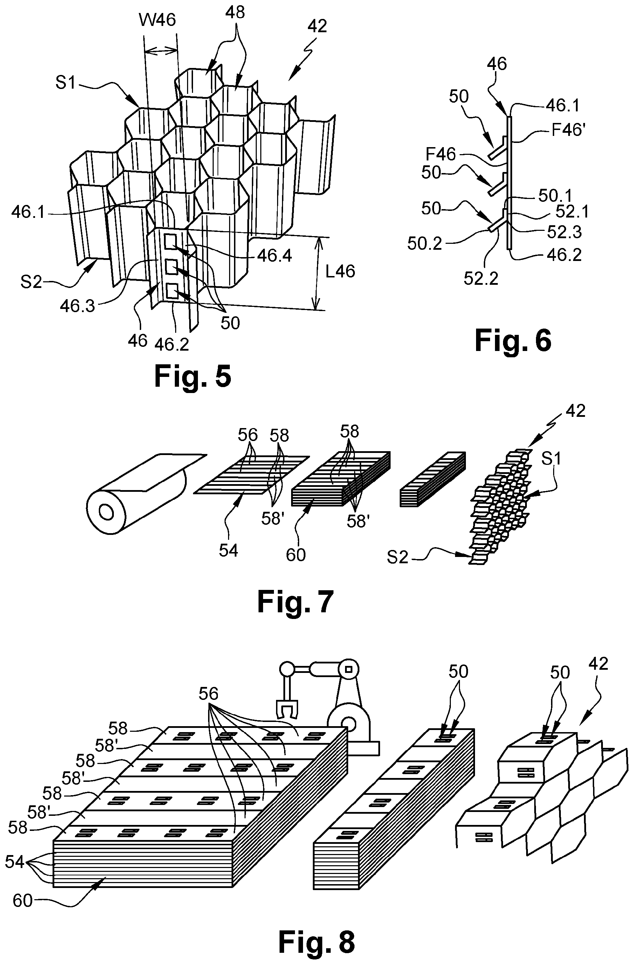

La structure alvéolaire 42 s'étend entre une première surface S1 en contact avec ou orientée vers la structure perméable 40 ainsi qu'une deuxième surface S2 en contact avec ou orientée vers la couche pleine 44. La structure alvéolaire 42 comprend une pluralité de cloisons 46 qui présentent chacune un premier bord 46.1 au niveau de la première surface S1, un deuxième bord 46.2 au niveau de la deuxième surface S2 ainsi que des troisième et quatrième bords 46.3, 46.4 (visibles sur la figure 5) reliant les premier et deuxième bords 46.1, 46.2, qui s'étendent entre les première et deuxième surfaces S1, S2, sensiblement parallèles entre eux. Les cloisons 46 délimitent entre elles des cellules 48 ouvertes chacune à une première extrémité au niveau de la première surface S1 ainsi qu'à une deuxième extrémité au niveau de la deuxième surface S2.

Selon une configuration, les cellules 48 présentent des sections transversales (dans un plan transversal parallèle à la première ou deuxième surface S1, S2) identiques et hexagonales. Ainsi, la structure alvéolaire 42 forme un nid d'abeilles. Bien entendu, l'invention n'est pas limitée à cette configuration. Les cellules 48 peuvent avoir des sections transversales différentes et non hexagonales.

Quelle que soit la configuration, la structure alvéolaire 42 présente une multitude de cellules 48, 48' séparées par des cloisons 46 qui présentent chacune un premier bord 46.1 au niveau de la première surface S1, un deuxième bord 46.2 au niveau de la deuxième surface S2 ainsi que des troisième et quatrième bords 46.3, 46.4 reliant les premier et deuxième bords 46.1, 46.2 ; deux cloisons 46 adjacentes étant reliées au niveau de leurs troisième et quatrième bords 46.3, 46.4. Les cellules 48, 48' sont dimensionnées en volume de manière à atténuer, selon le principe d'un résonateur d'Helmholtz, une plage d'ondes sonores présentant des fréquences relativement élevées, situées dans une plage de 1500 à 5000 Hz.

Selon un mode de réalisation, la structure alvéolaire 42 comprend une masse volumique de l'ordre de 20 à 150 kg/m3, des cloisons 46 qui ont une largeur W46 (dimension séparant les troisième et quatrième bords 46.3, 46.4) de l'ordre de 4 à 20 mm et une longueur L46 (dimension séparant les premier et deuxième bords 46.1, 46.2) de l'ordre de 10 à 60 mm ainsi que des cellules 48 hexagonales.

Chaque cloison 46 présente une première face F46 orientée vers une première cellule 48 et une deuxième face F46' orientée vers une deuxième cellule 48', une épaisseur E correspondant à une dimension séparant les première et deuxième faces F46, F46', une longueur L46 correspondant à une distance séparant les premier et deuxième bords 46.1, 46.2 ainsi qu'une largeur W46 correspondant à une dimension séparant les troisième et quatrième bords 46.3, 46.4.

Selon un mode de réalisation, certaines cloisons 46, dites cloisons simples, comprennent chacune une unique couche de matière. Certaines cloisons 46, dites cloisons doubles, comprennent chacune deux couches de matière collées l'une contre l'autre.

Selon une caractéristique de l'invention, un panneau d'atténuation acoustique qui est configuré pour atténuer au moins une onde sonore présentant une fréquence sonore donnée comprend une structure alvéolaire 42 qui comporte au moins un élément rapporté, distinct des cloisons 46, configuré pour vibrer à une fréquence sensiblement égale à la fréquence sonore donnée de l'onde sonore à atténuer. Par sensiblement égale, on entend que la fréquence vibratoire est comprise dans une plage de fréquences de +/- 10% la fréquence sonore.

Ainsi, en plus d'atténuer des ondes sonores à des fréquences élevées selon le principe d'un résonateur d'Helmholtz, la structure alvéolaire 42 est configurée pour atténuer des ondes sonores sur une autre plage de fréquences, notamment de basses fréquences grâce aux éléments rapportés vibrants.

Selon un mode de réalisation visible sur les figures 5, 6 et 8, l'élément rapporté est une languette 50 présentant une première extrémité 50.1 reliée à une cloison 46 de la structure alvéolaire 42 ainsi qu'une deuxième extrémité 50.2 libre configurée pour vibrer à une fréquence sensiblement égale à une fréquence sonore d'une onde sonore à atténuer. Chaque languette 50 présente une première partie 52.1, plaquée contre la cloison 46 et fixée à cette dernière, qui s'étend à partir de la première extrémité 50.1 ainsi qu'une deuxième partie 52.2, détachée de la cloison 46, qui s'étend à partir de la deuxième extrémité 50.2, les première et deuxième parties 52.1, 52.2 étant séparées par une ligne de pliage 52.3.

Selon une configuration, toutes les cloisons 46 simples d'au moins une zone considérée de la structure alvéolaire 42 comprennent chacune au moins une languette 50.

Selon un agencement visible sur les figures 5 et 6, la structure alvéolaire 42 comprend trois languettes 50 fixées sur la même cloison 46, alignées selon une direction sensiblement parallèle aux troisième ou quatrième bords 46.3, 46.4 de la cloison 46, approximativement centrées entre ces troisième et quatrième bords 46.3, 46.4 et régulièrement réparties entre les premier et deuxième bords 46.1, 46.2.

Selon un mode de réalisation, chaque languette 50 est métallique (comme en alliage d'aluminium par exemple) ou en matériau composite (comme à base de fibres en aramide par exemple) et présente une épaisseur de l'ordre de 50 à 500 µm. Elle présente une largeur (dimension de la ligne de pliage 52.3) constante de l'ordre de 10 à 90% de la largeur W46 et la deuxième partie 52.2 présente une longueur (dimension entre la ligne de pliage 52.3 et la deuxième extrémité 50.2) de l'ordre de 5 à 80% de la longueur L46. Une telle languette 50 vibre à une fréquence de l'ordre de 500 à 1500 Hz. Ainsi, le panneau d'atténuation acoustique 38 comprenant au moins une telle languette 50 est configuré pour atténuer des ondes sonores sur deux plages de fréquences, à savoir des fréquences élevées supérieures à 1500 Hz et des fréquences basses de l'ordre de 500 à 1500 Hz.

Bien entendu, l'invention n'est pas limitée à ce nombre de languettes 50 par cloison 46, à cette géométrie, à cet agencement et à cette matière pour les languettes 50. Ainsi, les languettes peuvent être rapportées sur une unique face F46, F46' d'une cloison 46 ou sur les deux.

Ainsi, en fonction de la fréquence sonore de l'onde sonore à atténuer, l'homme du métier détermine la matière, l'agencement et la géométrie des languettes 50 pour qu'elles vibrent à une fréquence vibratoire sensiblement égale à la fréquence sonore de l'onde sonore à atténuer.

Selon un mode de réalisation visible sur la figure 7, un procédé de fabrication d'au moins une structure alvéolaire 42 comprend une première étape de découpe de feuilles 54 rectangulaires, une deuxième étape de pliage des feuilles 54 selon des lignes de pliage 56 correspondant aux troisième et quatrième bords des cloisons 46 de manière à obtenir des bandes 58, 58' qui correspondent aux cloisons 46 de la structure alvéolaire 42 à obtenir, une troisième étape d'encollage de certaines bandes 58' sur l'une ou l'autre des faces de chaque feuille 54, les bandes 58 paires (correspondant aux cloisons 46 simples) n'étant encollées sur aucune des deux faces de la feuille 54, les bandes 58' impaires (correspondant aux cloisons 46 doubles) étant alternativement encollées sur la première face puis sur la deuxième face de la feuille 54, une étape d'empilage des feuilles 54 de manière à obtenir un empilage 60 de feuilles 54, une éventuelle quatrième étape de découpe de l'empilage 60 à une dimension sensiblement égale à la longueur L46 des cloisons 46 et enfin une dernière étape d'étirement de l'empilage 60 de manière à obtenir la structure alvéolaire 42.

Ces différentes étapes peuvent être automatisées.

Comme illustré sur la figure 8, le procédé de fabrication de la structure alvéolaire 42 comprend une étape de pose des languettes 50, qui peut être automatisée. Selon un mode opératoire, elle peut être réalisée sur chaque feuille 54 avant l'étape d'empilage ou de manière alternée avec l'étape d'empilage, les languettes 50 étant posées après le dépôt d'une nouvelle feuille 54.

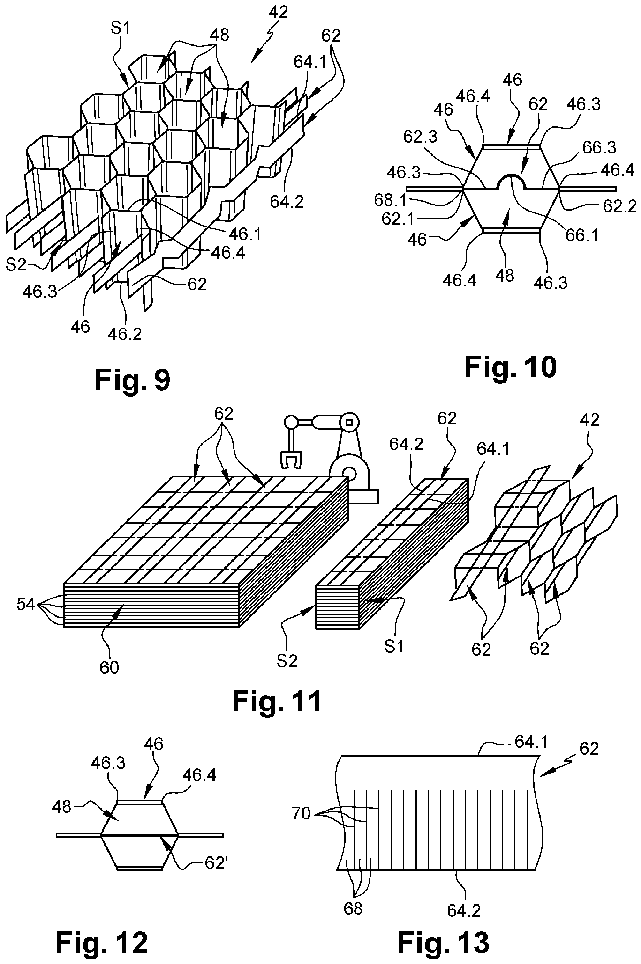

Selon un autre mode de réalisation visible sur les figures 9 à 11, l'élément rapporté est une bande de matière 62 présentant deux extrémités 62.1, 62.2 reliés aux cloisons 46 de la structure alvéolaire 42 et traversant au moins une cellule 48, ladite bande de matière 62 étant configurée pour vibrer à une fréquence sensiblement égale à une fréquence sonore d'une onde sonore à atténuer.

Cette bande de matière 62 présente des bords supérieur et inférieur 64.1, 64.2 sensiblement parallèles entre eux et aux premier et deuxième bords 46.1, 46.2 des cloisons 46.

Pour chaque cellule 48 de la cellule alvéolaire 42 traversée, la bande de matière 62 comprend une partie centrale 66.1 courbe ainsi que des première et deuxième parties latérales 66.2, 66.3, plates et coplanaires, disposées respectivement entre la première extrémité 62.1 et la partie centrale 66.1 ainsi qu'entre la deuxième extrémité 62.2 et la partie centrale 66.1. En variante, la partie centrale 66.1 forme un V en vue de dessus. Quelle que soit la variante, pour chaque cellule 48, la bande de matière 62 comprend une sur-longueur entre ses première et deuxième extrémités 68.1, 68.2 lui permettant de vibrer. Selon un mode opératoire, pour chaque bande de matière 68, chaque partie centrale 72.1 est obtenue par pliage.

Selon un agencement, la structure alvéolaire 42 comprend une unique bande de matière 62 positionnée dans une unique cellule 48. Selon une autre configuration, la structure alvéolaire 42 comprend plusieurs bandes de matière 62 traversant toutes les cellules 48 d'au moins une zone considérée de la structure alvéolaire 42. Comme illustré sur les figures 9 et 11, une même bande de matière 62 peut traverser plusieurs cellules 48.

Selon une configuration, chaque bande de matière 62 est approximativement centrée par rapport aux premier et deuxième bords 46.1, 46.2 des cloisons 46 et présente une hauteur (dimension prise perpendiculairement aux bords supérieur et inférieur 64.1, 64.2) sensiblement égale à un tiers de la longueur L46 des cloisons 46. Chaque bande de matière 62 est métallique (comme en alliage d'aluminium par exemple) ou en matériau composite (comme à base de fibres en aramide par exemple) et présente une épaisseur de l'ordre de 20 à 500 µm. Pour chaque cellule 48, chaque bande de matière 62 comprend une partie centrale 66.1 demi-cylindrique présentant un axe sensiblement parallèle aux troisième et quatrième bords 46.3, 46.4 des cloisons 46 ainsi qu'un rayon de l'ordre de 0,5 à 3 mm.

Une telle bande de matière 62 est configurée pour vibrer à une fréquence de l'ordre de 500 à 1500 Hz. Ainsi, le panneau d'atténuation acoustique 38 comprenant au moins une telle bande de matière 62 est configuré pour atténuer des ondes sonores ayant une fréquence de l'ordre de 500 à 1500 Hz.

Bien entendu, l'invention n'est pas limitée à cette configuration pour les bandes de matière 62. Ainsi, comme illustré sur les figures 12 et 13, chaque bande de matière 62' est plate et présente des franges 68 séparées par des découpes 70 rectilignes, parallèles entre elles et aux troisième et quatrième bords 46.3, 46.4 des cloisons 46, qui s'étendent à partir d'un premier bord parmi les bords supérieur et inférieur 64.1, 64.2 et sont distantes d'un deuxième bord, différent du premier bord, parmi les bords supérieur ou inférieur 64.1, 64.2.

Ainsi, en fonction de la fréquence sonore de l'onde sonore à atténuer, l'homme du métier détermine au moins une caractéristique (emplacement, géométrie, matière,...) d'au moins une bande de matière 62, 62' pour qu'elle vibre à une fréquence vibratoire sensiblement égale à la fréquence sonore de l'onde sonore à atténuer.

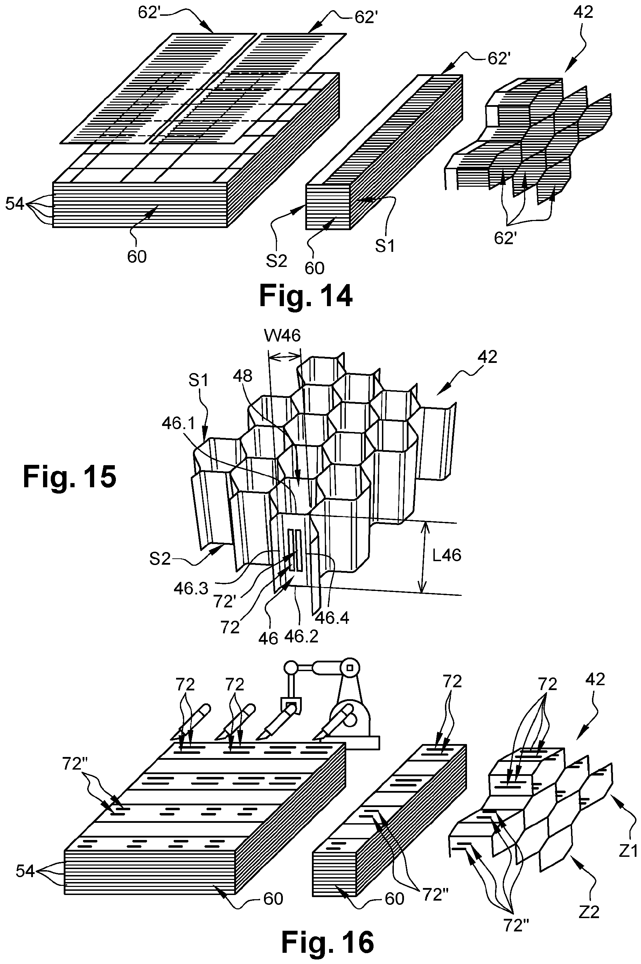

Comme illustré sur les figures 11 et 14, le procédé de fabrication de la structure alvéolaire 42 comprend une étape de pose des bandes de matière 62, 62' qui peut être automatisée. Selon un mode opératoire, les bandes de matières 62, 62' sont intercalées entre les feuilles 54 lors de l'étape d'empilage.

Quel que soit le mode opératoire, le procédé de fabrication de la structure alvéolaire 42 comprend une étape de pose des éléments rapportés 50, 62, 62', qui peut être automatisée. Selon un mode opératoire, elle peut être réalisée sur chaque feuille 54 avant l'étape d'empilage ou de manière alternée avec l'étape d'empilage, les éléments rapportés 50, 62, 62' étant posés après le dépôt d'une nouvelle feuille 54.

Selon un mode de réalisation visible sur la figure 15, un panneau d'atténuation acoustique qui est configuré pour atténuer au moins une onde sonore présentant une fréquence sonore donnée, comprend une structure alvéolaire 42 qui comporte au moins une cloison 46 présentant au moins une cavité 72 configurée de manière à ce que la cloison 46 vibre à une fréquence vibratoire sensiblement égale à la fréquence sonore donnée.

Selon un mode opératoire non limitatif, chaque cavité 72 est obtenue par un retrait de matière.

Selon une configuration, chaque cavité 72 est distant des premier, deuxième, troisième et quatrième bords 46.1 à 46.4. Toutefois, au moins une cavité 72 peut s'étendre jusqu'à au moins un bord parmi les premier, deuxième, troisième et quatrième bords 46.1 à 46.4. A titre d'exemple, au moins une cavité 72 peut s'étendre jusqu'au premier ou deuxième bord 46.1, 46.2.

Selon une configuration, chaque cavité 72 est non traversant et débouche uniquement sur l'une des première et deuxième faces F46, F46' de la cloison 46. Selon une autre configuration visible sur la figure 15, chaque cavité 72 est traversant et débouche au niveau des première et deuxième faces F46, F46' de la cloison 46.

Selon une configuration, au moins une cloison 46 comprend une unique cavité 72. Selon une autre configuration, au moins une cloison 46 comprend plusieurs cavités 72, 72'.

Selon un agencement, toutes les cloisons 46 simples d'au moins une zone considérée de la structure alvéolaire 42 comprennent chacune au moins une cavité 72, 72'.

Selon un mode de réalisation, la structure alvéolaire 42 comprend une masse volumique de l'ordre de 20 à 150 kg/m3, des cloisons 46 qui ont une largeur W46 de l'ordre de 4 à 20 mm et une longueur L46 de l'ordre de 10 à 60 mm ainsi que des cellules 48 hexagonales dimensionnées pour atténuer des ondes sonores de fréquence située dans une plage de 1500 Hz à 5000 Hz.

Au moins certaines cloisons, notamment les cloisons 46 simples, comprennent chacune deux cavités 72, 72' traversantes (reliant les première et deuxième faces F46, F46') qui présentent chacune une longueur L72, prise selon une première direction parallèle aux troisième et quatrième bords 46.3, 46.4, de l'ordre de 10 à 90% de la longueur L72 et une largeur W72, prise selon une deuxième direction parallèle aux premier et deuxième bords 46.1, 46.2, de l'ordre de 0,1 à 1 mm. Les deux cavités 72, 72' d'une même cloison 46 sont décalées l'une par rapport à l'autre selon la deuxième direction, espacées entre elles d'une distance de l'ordre de 10 à 90% de la largeur W72 et sont sensiblement centrées par rapport aux premier et deuxième bords 46.1, 46.2 ainsi que par rapport aux troisième et quatrième bords 46.3, 46.4. De telles cavités 72, 72' permettent à la cloison 46 de vibrer à une fréquence vibratoire de l'ordre de 500 à 1000 Hz.

Ainsi, une structure alvéolaire 42 qui présente des cellules 48 ayant un volume adapté pour atténuer des ondes sonores d'une première fréquence selon le principe d'un résonateur d'Helmholtz comprend des cloisons 46 dont certaines comprennent chacune au moins une cavité 72 configurée pour permettre aux dites cloisons de vibrer à une deuxième fréquence et d'atténuer ainsi des ondes sonores de la deuxième fréquence.

Connaissant la fréquence d'une onde sonore à atténuer ainsi que les caractéristiques des cloisons 46 parmi notamment la matière, l'épaisseur, la longueur et la largeur, l'homme du métier est en mesure de déterminer les caractéristiques du (ou des) cavité(s) 72, 72' à réaliser sur au moins une cloison 46 pour que ladite cloison 46 vibre à une fréquence donnée sensiblement égale à la fréquence de l'onde sonore à atténuer.

Selon une configuration, toutes les cloisons 46 simples sont vibrantes et présentent toutes les mêmes cavités 72, 72' et sont toutes configurées pour vibrer à la même fréquence.

Selon une autre configuration visible sur la figure 16, la structure alvéolaire 42 présente au moins des première et deuxième zones Z1, Z2, au moins une cloison 46 de la première zone présentant au moins une cavité 72 configurée pour permettre à la cloison 46 de la première zone Z1 de vibrer à une première fréquence, au moins une cloison 46 de la deuxième zone présentant au moins une cavité 72" configurée pour permettre à la cloison 46 de la deuxième zone Z2 de vibrer à une deuxième fréquence différente de la première fréquence.

Selon un mode opératoire visible sur la figure 16, le procédé de fabrication de la structure alvéolaire 42 visible sur la figure 15 comprend au moins une étape de réalisation des cavités 72, 72' indifféremment réalisée avant ou après l'étape d'empilage des feuilles 54, dans tous les cas avant l'étape d'étirement. Lorsque les cavités 72 sont traversantes, l'étape de réalisation des cavités 72 est réalisée après l'étape d'empilage de manière à simultanément générer les cavités 72 sur plusieurs feuilles 54 superposées. L'étape de réalisation des cavités 72 peut également être automatisée. A titre indicatif et non limitatif, l'étape de réalisation des cavités 72 est obtenue par une découpe à ultrason, une tête de découpe à ultrason 74 étant fixée à l'extrémité d'un bras articulé 76.

Selon un agencement, la structure alvéolaire 42 comprend au moins des première et deuxième zones, la première zone étant configurée pour atténuer au moins une onde sonore présentant une première fréquence sonore, la deuxième zone étant configurée pour atténuer au moins une onde sonore présentant une deuxième fréquence sonore différente de la première fréquence sonore. La structure alvéolaire 42 comprend dans la première zone au moins un élément rapporté, distinct des cloisons 46, comme une languette 50, une bande de matière 62, 62' par exemple, configuré pour vibrer à une fréquence sensiblement égale à la première fréquence sonore.

La structure alvéolaire 42 comprend dans la deuxième zone au moins un élément rapporté, distinct des cloisons 46, comme une languette 50, une bande de matière 62, 62' par exemple, configuré pour vibrer à une fréquence sensiblement égale à la deuxième fréquence sonore ou au moins une cloison pourvue d'au moins une cavité 72 configurée de manière à ce que la cloison vibre à une fréquence sensiblement égale à la deuxième fréquence sonore.

Ainsi, il est possible de concevoir une structure alvéolaire qui présente une épaisseur relativement faible et constante ainsi que plusieurs zones, chacune d'elles étant conçue pour atténuer des ondes sonores à une fréquence donnée.

## Revendications

1. Structure alvéolaire d'un panneau d'atténuation acoustique configuré pour atténuer au moins une onde sonore de fréquence sonore donnée, la structure alvéolaire (42) s'étendant entre des première et deuxième surfaces (S1, S2), la structure alvéolaire (42) comportant une multitude de cellules (48, 48') séparées par des cloisons (46) qui présentent chacune un premier bord (46.1) au niveau de la première surface (S1), un deuxième bord (46.2) au niveau de la deuxième surface (S2) ainsi que des troisième et quatrième bords (46.3, 46.4) reliant les premier et deuxième bords (46.1, 46.2) ; **caractérisée en ce que** la structure alvéolaire (42) comprend au moins un élément rapporté, distinct des cloisons (46), configuré pour vibrer à une fréquence sensiblement égale à la fréquence sonore de l'onde sonore à atténuer.

2. Structure alvéolaire selon la revendication 1, **caractérisée en ce que** l'élément rapporté est une languette (50) présentant une première extrémité (50.1) reliée à une cloison (46) de la structure alvéolaire (42) ainsi qu'une deuxième extrémité (50.2) libre, ladite languette (50) étant configurée pour vibrer à une fréquence sensiblement égale à la fréquence sonore de l'onde sonore à atténuer.

3. Structure alvéolaire selon la revendication précédente, **caractérisée en ce que** la structure alvéolaire (42) comprend trois languettes (50) fixées sur la même cloison (46), alignées selon une direction sensiblement parallèle aux troisième ou quatrième bords (46.3, 46.4) de la cloison (46), approximativement centrées entre ces troisième et quatrième bords (46.3, 46.4) et régulièrement réparties entre les premier et deuxième bords (46.1, 46.2).

4. Structure alvéolaire selon la revendication précédente, **caractérisée en ce que** les cloisons (46) présentent chacune une longueur (L46), prise selon une direction parallèle aux troisième quatrième bords (46.3, 46.4), ainsi qu'une largeur (W46), prise selon une direction parallèle aux premier et deuxième bords (46.1, 46.2), et **en ce que** chaque languette (50) présente une première partie (52.1), plaquée contre la cloison (46) et fixée à cette dernière, qui s'étend à partir de la première extrémité (50.1) ainsi qu'une deuxième partie (52.2), détachée de la cloison (46), qui s'étend à partir de la deuxième extrémité (50.2), les première et deuxième parties (52.1, 52.2) étant séparées par une ligne de pliage (52.3) et **en ce que** chaque languette (50) présente une épaisseur de l'ordre de 50 à 500 µm, une largeur constante de l'ordre de 10 à 90% de la largeur (W46) des cloisons (46), la deuxième partie (52.2) présentant une longueur de l'ordre de 5 à 80 % de la longueur (L46) des cloisons (46).

5. Structure alvéolaire selon l'une des revendications 2 à 4, **caractérisée en ce que** la structure alvéolaire (42) comprend des cloisons (46) simples comprenant chacune une unique couche de matière et des cloisons (46) doubles comprenant chacune deux couches de matière collées l'une contre l'autre et **en ce que** toutes les cloisons (46) simples d'au moins une zone considérée de la structure alvéolaire (42) comprennent chacune au moins une languette (50, 50').

6. Structure alvéolaire selon la revendication 1, **caractérisée en ce que** l'élément rapporté est une bande de matière (62, 62') présentant deux extrémités (62.1, 62.2) reliés aux cloisons (46) de la structure alvéolaire (42) et traversant au moins une cellule (48), ladite bande de matière (62, 62') étant configurée pour vibrer à une fréquence sensiblement égale à la fréquence sonore de l'onde sonore à atténuer.

7. Structure alvéolaire selon la revendication 6, **caractérisée en ce que** la bande de matière (62, 62') présente des bords supérieur et inférieur (64.1, 64.2) sensiblement parallèles entre eux et aux premier et deuxième bords (46.1, 46.2) des cloisons (46).

8. Structure alvéolaire selon la revendication 6 ou 7, **caractérisée en ce que**, pour chaque cellule (48) de la cellule alvéolaire (42) traversée, la bande de matière (62) comprend une sur-longueur lui permettant de vibrer.

9. Structure selon la revendication précédente, **caractérisée en ce que** chaque bande de matière (62) présente une hauteur sensiblement égale à un tiers de celle des cloisons (46) ainsi qu'une épaisseur de l'ordre de 20 à 500 µm, chaque bande de matière (62) présentant dans chaque cellule (48) traversée une partie centrale (66.1) courbe ainsi que des première et deuxième parties latérales (66.2, 66.3), plates et coplanaires, disposées de part et d'autre de la partie centrale (66.1).

10. Structure alvéolaire selon la revendication 6 ou 7, **caractérisée en ce que** chaque bande de matière (62') est plate et présente des franges (68).

11. Structure alvéolaire selon l'une des revendication 6 à 10, **caractérisée en ce que** la structure alvéolaire (42) comprend plusieurs bandes de matière (62) traversant toutes les cellules (48) d'au moins une zone considérée de la structure alvéolaire (42).

12. Structure alvéolaire selon l'une des revendications précédentes, **caractérisée en ce que** la structure alvéolaire (42) comprend au moins des première et deuxième zones, la première zone étant configurée pour atténuer au moins une onde sonore présentant une première fréquence sonore, la deuxième zone étant configurée pour atténuer au moins une onde sonore présentant une deuxième fréquence sonore différente de la première fréquence sonore, la structure alvéolaire (42) comprenant dans la première zone au moins un élément rapporté (50, 62, 62'), distinct des cloisons (46), configuré pour vibrer à une fréquence sensiblement égale à la première fréquence sonore.

13. Structure alvéolaire selon la revendication précédente, **caractérisée en ce qu'**au moins une cloison (46) de la deuxième zone présente au moins une cavité (72) configurée de manière à ce que ladite cloison (46) de la deuxième zone vibre à une fréquence sensiblement égale à la deuxième fréquence sonore.

14. Structure alvéolaire selon la revendication 12, **caractérisée en ce que** la structure alvéolaire (42) comprend dans la deuxième zone au moins un élément rapporté (50, , 62'), distinct des cloisons (46), configuré pour vibrer à une fréquence sensiblement égale à la deuxième fréquence.

15. Procédé de fabrication d'une structure alvéolaire (42) selon l'une des revendications précédentes, le procédé de fabrication comprenant une étape de découpe de feuilles (52), des étapes de pliage et d'encollage des feuilles (52), une étape d'empilage des feuilles (52) de manière à obtenir un empilage (58) de feuilles (52) ainsi qu'une étape d'étirement de l'empilage (58) de manière à obtenir la structure alvéolaire (42) ; **caractérisé en ce que** le procédé de fabrication comprend une étape de pose des éléments rapportés (50, 62, 62') réalisée sur chaque feuille (54) avant l'étape d'empilage ou de manière alternée avec l'étape d'empilage, les éléments rapportés (50, 62, 62') étant posés après le dépôt d'une nouvelle feuille (54).

16. Panneau d'atténuation acoustique comprenant une structure perméable (40), une couche pleine (44) ainsi qu'au moins une structure alvéolaire (42) selon l'une des revendications 1 à 14, intercalée entre la structure perméable (40) et la couche pleine (44).

17. Aéronef comprenant au moins un panneau d'atténuation acoustique selon la revendication précédente.
